# EUROPEAN PATENT SPECIFICATION

(11) **EP 3 021 440 B1**
(45) Date of publication and mention of the grant of the patent: **26.09.2018**
(21) Application number: 15194195.2
(22) Date of filing: 12.11.2015
(51) Int. Cl.: H02G 3/20

(54) **A CONNECTION DEVICE FOR AN ELECTRICAL DEVICE**
VERBINDUNGSVORRICHTUNG FÜR EINE ELEKTRISCHE VORRICHTUNG
DISPOSITIF DE CONNEXION POUR UN DISPOSITIF ÉLECTRIQUE

(30) Priority: 12.11.2014 FI 20145991
(43) Date of publication of application: 18.05.2016
(73) Proprietor: Ensto Finland Oy, 06100 Porvoo (FI)
(72) Inventor: Lindroos, Kaj, 07955 Tesjoki (FI); Matikainen, Esko, 06400 Porvoo (FI); Sundberg, Frans, 01120 Västerskog (FI)
(74) Representative: Papula Oy

(56) References cited:
- EP-A2- 2 086 080
- WO-A1-02/056438
- FR-A1- 2 792 712
- FR-A1- 2 949 535
- GB-A- 2 320 819
- GB-A- 2 400 987
- DoitYourself - Forum: "Adding a light fixture to a Heritage Brand; Lancaster Series; Ceiling Fan. - DoItYourself.com Community Forums", , 5 March 2013 (2013-03-05), XP055257846, Retrieved from the Internet: URL:http://www.doityourself.com/forum/ligh ting-light-fixtures-ceiling-exhaust-fans/4 94397-adding-light-fixture-heritage-brand- lancaster-series-ceiling-fan.html#post2105 754 [retrieved on 2016-03-14]

## Description

### FIELD OF THE INVENTION

The invention relates to electric installation devices. More specifically, the invention relates to a connection device for installing an electric device at a ceiling.

### BACKGROUND OF THE INVENTION

Lighting fixtures, lamps or fans are usually installed at the ceiling with connection devices such as lighting sockets. The lighting socket assembly is usually fastened to the ceiling by two fasteners, such as bolts or screws, on the two sides of the lighting socket assembly. On a concrete ceiling structure this has required the drilling of at least two holes for sleeve anchors, wherein the fasteners are screwed to the sleeve anchors fixed into the concrete.

This preinstalling portion is time consuming and may require additional tools for drilling the holes at the ceiling made of concrete. The installing position is difficult; the installer must stand on a ladder, keep his hands above the head, and switching the tool may require the installer to come down from the ladder. These steps make the installation time longer.

On the Internet forum "DoitYourself - Forum" (http://www.doityourself.com/forum/lighting-light-fixtures-ceiling-exhaust-fans/494397-adding-light-fixture-heritage-brand-lancaster-series-ceiling-fan.html#post2105754) a connection device for electrical devices attached to a ceiling fan is disclosed and in GB 2400987 a socket connector for connecting lighting devices to walls, ceilings and lamps is disclosed. Both of these two disclosures involve only conventional means such as bolts or screws for attaching the corresponding socket assemblies to the fan or the ceiling.

Document WO02056438 discloses an electrical connection system and box for concrete ceiling, document EP2086080 discloses a ceiling suspension assembly.

### SUMMARY

The invention discloses a connection device for installing an electrical device at a ceiling. Examples of electrical devices to be installed are lighting fixtures, luminaires, lamps, fans or alarm devices operating on electric power. The connection device comprises a connection interface for receiving a power cable, a connection interface for providing electric power to the electrical device, and a supporting element configured to be connected to a concrete ceiling structure and to support the electrical device. The connection device further comprises an opening for receiving the electric power and a ceiling fastener from the ceiling structure, where the ceiling fastener is selected from the group consisting of a bolt, a screw or an assembly of a threaded rod and a nut, the opening comprising a slot in the supporting element for slidably receiving the body of a ceiling fastener, and the slot comprising a fixing portion smaller than the head of the ceiling fastener, said portion of the supporting element being configured to suspend the connection device from the head of the ceiling fastener.

In an embodiment the connection device comprises a shape for keeping the fastener head in the fixing portion of the supporting element when the connection device is suspended from the fastener head. For example, the fastener head may be a screw head or a bolt head and the connection device may comprise a protruding portion that keeps the fastener head in place when the connection device is suspended from the fastener head. The fastener does not need to be tightened for the shape to function - it enables the connecting device to stay in a correct position in the slot when tightening the fastener. The shape may be a clip or protruding part that allows the fastener to be tightened with a screwdriver.

In an embodiment the connection device for providing electric power to the electrical device is a lighting socket outlet. In an embodiment the connection interface for providing electric power to the electrical device is a device for the connection of luminaires (DCL). In an embodiment the ceiling fastener is selected from the group consisting of a bolt, or a screw or an assembly of a threaded rod and a nut, wherein the nut is arranged as a head of the fastener.

Another aspect of the invention discloses a system for installing a connection device for an electrical device at a ceiling, comprising the connection device, a ceiling fastener and an anchor for anchoring the ceiling fastener to the ceiling. The connection device comprises a connection interface for receiving an electric cable, a connection interface for providing electric power to the electrical device and a supporting element configured to be connected to a ceiling structure and to support the electrical device. The anchor comprises a foldable structure having at least two positions; the first position for an installation phase, configured to fit in a ceiling opening for the electric cable; the second position comprising an expanded form that is larger than the diameter of the ceiling opening, configured to suspend the ceiling fastener from the ceiling. The connection device comprises elements of the first aspect.

In an embodiment the foldable structure comprises at least two positions: the first position for an installation phase, being parallel to the ceiling fastener, configured to fit in a ceiling opening for the electric cable; and the second position being perpendicular to the ceiling fastener, configured to suspend the ceiling fastener from the ceiling.

The present invention enables simpler installation of the electrical device at the ceiling. In a building structure comprising a hollow core slab, for example in a multi-story building where the ceiling structure comprises the slab, the slab elements are precast. Electrical cabling is led inside the building through the hollow tubes of the slab during the building process. A hole is drilled in the hollow tube of the slab in order to lead the electric cable through the ceiling. The hole may be drilled wide enough to enable a fastener to fit through the hole. The electric cable and the fastener exit the hole side by side and the connecting device is tightened to the ceiling and in connection to the hole; therefore, the single opening on the connecting device allows the cable and the fastener to enter the connecting device. The slot on the supporting element reaches the opening and the proximity of the cable and the fastener enables the slot to be used in the tightened position. In an embodiment the shape of the fastener head arranged in the connecting device enables the fastener to retain its place during the installation and the tightening process. The anchor may be inserted through the hole and the anchor spreads in the tube of the slab, resulting in a fast and secure fastening. The installation process may be completed without drilling a specific hole for the connection device.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figs. 1a** - **1b** are exemplary illustrations of one embodiment of a connection device for installing an electrical device at a ceiling from two different viewing angles;
**Fig. 2** illustrates another exemplary embodiment of the connection device;
**Figs. 3** **and** **4** illustrate an exemplary embodiment with the connection device and an electric cable from two different viewing angles;
**Fig. 5** illustrates from two different viewing angles one embodiment tightened to a hollow concrete slab; and
**Figs. 6a** - **6b** illustrate another exemplary embodiment of the connection device.

### DETAILED DESCRIPTION OF THE INVENTION

Reference will now be made in detail to the embodiments of the present invention, examples of which are illustrated in the accompanying drawings. The detailed description provided below in connection with the appended drawings is intended as a description of the present examples and is not intended to represent the only forms in which the present example may be constructed or utilized. However, the same or equivalent functions and sequences may be accomplished by different examples.

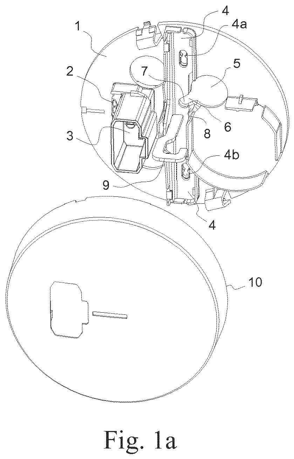

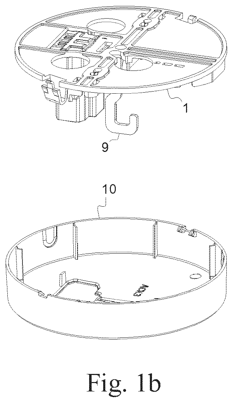

Figures 1a and 1b illustrate from two different viewing angles one example of a connection device for installing an electrical device 1 at a ceiling. The connection device 1 is illustrated in this example without the fastener or the anchor. The connection device 1 comprises a connection interface for receiving the electric cable 2, means for receiving the electric power cable 2 wherein the electric cable from the ceiling is connected to. The connection device 1 comprises also a connection interface for providing electric power to the electrical device 3 or means for providing electric power 3. In this example the connection interface 3 is a DCL, a device for the connection of luminaires. Other lighting socket outlets or means for connecting electric power cords or cables may be used.

A supporting element 4 is positioned in the middle of the connection device 1, extending to both edges. The supporting element 4 may be made of steel or any other durable material suitable for suspending a lamp or a lighting fixture. The supporting element 4 may be fixed to the connection device 1 by matching shapes, for example the connection device may be made of plastic material having a pocket where the metal supporting element is installed. The supporting element 4 comprises in this example holes 4a, 4b according to prior art that may be used to fix the connection device 1 to the ceiling for example with sleeve anchors and screws or bolts to be connected to a mounting box with threads for receiving the bolt.

An opening 5 is arranged into the connection device 5, wherein the electric power cable or cables and a ceiling fastener may be received in the connection device 1 from the ceiling structure. A slot 6 is arranged in the opening 5, wherein the slot 6 extends to the supporting element. The slot 6 comprises a fixing portion 7, in this example at the end of the slot 6, where the ceiling fastener may be tightened. The body of the fastener, for example a bolt body, may be slid in the slot 6 up to the fixing portion 7 at the end of the slot 6. The slot 6 is wide enough to enable the bolt body to be moved in it, but the bolt head is wide enough not to fit through the slot 6. The slot 6 may not be equally wide at all positions, but at least one portion, in this example the fixing portion 7, is arranged to hold the bolt head in place. A shape 8 is arranged in the connection device 1 around the fixing portion 7 to further simplify the installation process by holding the fastener head in place during the tightening. The rotating fastener does not jump out of the fixing portion 7. The shape 8 may be a bump or a form partially implementing a cavity that matches the fastener head.

The electrical device, for example a lamp, may be suspended from the hook 9 that is connected to the supporting element 4, or the hook 9 is part of the supporting element 4. A cover 10 may be installed by two plastic clips over the connection device 1, wherein the hook 9 and the power outlet 3 to the electrical device are arranged through the cover 9. For example a lamp may be plugged into the device for the connection of luminaires 3 and suspended from the hook 9.

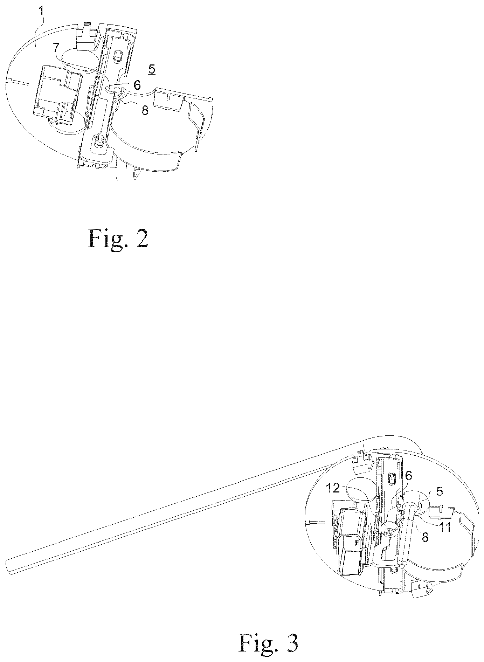

Figure 2 illustrates another embodiment of the connection device 1. The difference between this example and the example of Figures 1a and 1b is that in this example the opening 5 is defined as the quadrant of the connection device 1. The slot 6, the fixing portion 7 and the shape 8 and many other features may be similar to the previous example. Also another embodiment featuring another form of the connection device 1 may be created. The supporting element 4 must be durable enough to support and suspend the electrical device and it must have electrical connecting means in and out of the connection device 1. The supporting element 4 must comprise means for slidably inserting a fastener body and enable the fastener to tighten the supporting element 4 to the ceiling.

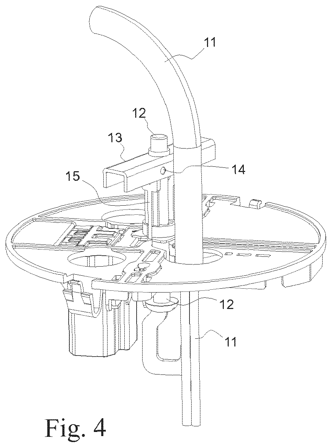

Figure 3 further illustrates the same example as Figures 1a and 1b, wherein the connection device 1 receives electric power via an electric cable 11 that is received through the opening 5. The fastener 12 has been slid to the fixing portion of the slot 6. The fastener comprises a head that fits to the shape 8. Figure 4 illustrates the same example as in Figure 3 from another angle, seen from the ceiling side. The fastener 12, a bolt in this example, is connected to the anchor 13 from a threaded portion. The anchor 13 in this example has at least two positions, wherein it may be pushed through a narrow hole in a position parallel to the fastener 12. The anchor assembly comprises a pivot 14 for changing the position to perpendicular to the ceiling fastener 12, as in Figure 4. The anchor assembly comprises in this example guiding means 15 to turn the anchor 13 inside the concrete slab to the second position. The anchor 13 is for example made of steel and is suitable for suspending the connection device 1 and the electrical device from the ceiling.

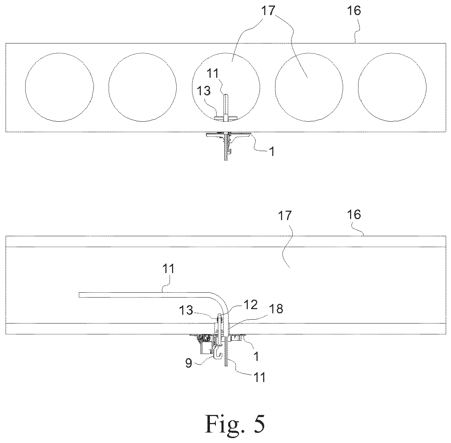

Figure 5 illustrates from two different viewing angles the connection device 1 tightened to a hollow concrete slab 16. The concrete slab comprises multiple hollow tubes 17. A hole 18 is drilled through the concrete slab 16 into the hollow tube 17. The hole 18 allows the electric cable 11 to be fed through the concrete slab 16, the anchor 13 to be fitted inside the hollow tube 17 and the fastener to be connected to the anchor 13. The anchor 13 suspends the ceiling fastener 12 and the connection device 1. In this example the electric power cable 11 is not connected to the connection device 1. The electric device may be suspended from the hook 9.

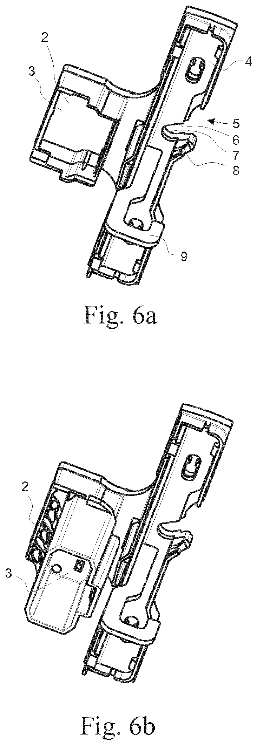

Figures 6a and 6b illustrate two examples of an embodiment, wherein the opening 5 is defined as the open portion next to the supporting element 4. The opening 5 may be used to slidably move the fastener to the slot 6 of the supporting element 4 and further to the fixing portion 7. The shape 8 for the fastener head may be configured in the supporting element 4 or in the structure surrounding the supporting element 4. The example of Figure 6a comprises no fixed arrangement for the connection interface 2 for receiving a power cable or the connection interface 3 for providing electric power to the electrical device. Instead, in this example the interfaces may be provided by a terminal block that may be fitted in the space 2, 3. The example of Figure 6b illustrates an embodiment, wherein the supporting element 4 and the opening 5 are defined similarly to Figure 6a.

One embodiment of the invention is a device, wherein the electrical device and the connection device are integrated as a single device. The connection device may be a separate portion of the electrical device that is preinstalled into the ceiling before attaching the rest of the electrical device. Examples of such electrical devices are luminaires, fans or alarm devices that are attached to the ceiling. The connection interface may be a portion of the electrical device.

Furthermore, if desired, one or more of the above-described functions may be optional or may be combined. Although various aspects of the invention are set out in the independent claims, other aspects of the invention comprise other combinations of features from the described embodiments and/or the dependent claims with the features of the independent claims, and not solely the combinations explicitly set out in the claims.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A connection device for installing an electrical device at a ceiling, comprising:
a connection interface for receiving an electric cable (2),
a connection interface for providing electric power to the electrical device (3),
a supporting element (4) configured to be connected to a concrete ceiling structure and to support the electrical device, and
an opening (5) for receiving the electric cable (11) and a ceiling fastener (12) from the ceiling structure; the ceiling fastener (12) being selected from the group consisting of a bolt, a screw or an assembly of a threaded rod and a nut;
**characterized by** the opening (5) comprising a slot (6) in the supporting element (4) for slidably receiving the body of the ceiling fastener (12), and
the slot (6) comprising a fixing portion (7) smaller than the head of the ceiling fastener (12), said portion of the supporting element (4) being configured to suspend the connection device (1) from the head of the ceiling fastener (12).

2. A connection device according to claim 1, **characterized by** comprising a shape for keeping the fastener (12) head in the fixing portion (7) of the supporting element (4) when the connection device (1) is suspended from the fastener (12) head.

3. A connection device according to claim 1 or 2, **characterized in that** the connection interface for providing electric power to the electrical device (3) is a lighting socket outlet.

4. A connection device according to any of the claims 1 to 3, **characterized in that** the connection interface for providing electric power to the electrical device (3) is a device for the connection of luminaires.

5. A system for installing a connection device (1) according to any of the preceding claims at a ceiling, comprising the connection device (1), the ceiling fastener (12) and an anchor (13) for anchoring the ceiling fastener (12) to the ceiling; **characterized by** the anchor (13) comprising at least two positions:
the first position for an installation phase, configured to fit in a ceiling opening (18) for the electric cable (11);
the second position comprising an expanded form that is larger than the diameter of the ceiling opening (18), configured to suspend the ceiling fastener (12) from the ceiling.

6. A system according to claim 5, **characterized by** the anchor (13) comprising at least two positions:
the first position for an installation phase, being parallel to the ceiling fastener (12), configured to fit in a ceiling opening (18) for the electric cable (11); and
the second position being perpendicular to the ceiling fastener (12), configured to suspend the ceiling fastener (12) from the ceiling.

7. A system according to claim 5 or 6, **characterized in that** the connection device (1) comprises a shape for keeping the fastener (12) head in the fixing portion (7) of the supporting element (4) when the connection device (1) is suspended from the fastener (12) head.

8. A system according to any of the claims 5 to 7, **characterized in that** the connection interface for providing electric power to the electrical device (3) is a lighting socket outlet.

9. A system according to any of the claims 5 to 8, **characterized in that** the connection interface for providing electric power to the electrical device (3) is a device for the connection of luminaires.

10. A system according to any of the claims 5 to 9, **characterized in that** the ceiling fastener (12) is a bolt or a screw.

## Patentansprüche

1. Eine Anschlussvorrichtung zum Installieren eines elektrischen Geräts an einer Decke, umfassend:
eine Verbindungsschnittstelle zur Aufnahme eines elektrischen Kabels (2),
eine Verbindungsschnittstelle zur Versorgung des elektrischen Gerätes (3) mit elektrischer Energie,
ein Stützelement (4), das so konfiguriert ist, dass es mit einer Betondeckenkonstruktion verbunden werden kann und das elektrische Gerät stützt, und
eine Öffnung (5) zur Aufnahme des elektrischen Kabels (11) und einer Deckenbefestigung (12) von der Deckenkonstruktion; wobei die Deckenbefestigung (12) aus der Gruppe bestehend aus einem Bolzen, einer Schraube oder einer Baugruppe aus Gewindestange und Mutter ausgewählt wird;
**dadurch gekennzeichnet, dass** die Öffnung (5) einen Schlitz (6) in dem Stützelement (4) zur gleitenden Aufnahme des Körpers der Deckenbefestigung (12) umfasst, und
der Schlitz (6) einen Befestigungsabschnitt (7) umfasst, der kleiner als der Kopf der Deckenbefestigung (12) ist, wobei der Abschnitt des Stützelements (4) so konfiguriert ist, um die Anschlussvorrichtung (1) am Kopf der Deckenbefestigung (12) aufzuhängen.

2. Eine Anschlussvorrichtung nach Anspruch 1, **dadurch gekennzeichnet, dass** sie eine Form zum Halten des Kopfes der Befestigung (12) in dem Befestigungsabschnitt (7) des Stützelements (4) umfasst, wenn die Anschlussvorrichtung (1) an dem Kopf der Befestigung (12) aufgehängt ist.

3. Eine Anschlussvorrichtung nach Anspruch 1 oder 2, **dadurch gekennzeichnet, dass** die Verbindungsschnittstelle zur Versorgung des elektrischen Gerätes (3) mit elektrischer Energie, eine Leuchtensteckdose ist.

4. Eine Anschlussvorrichtung nach einem der Ansprüche 1 bis 3, **dadurch gekennzeichnet, dass** die Verbindungsschnittstelle zur Versorgung des elektrischen Gerätes (3) mit elektrischer Energie, eine Vorrichtung für den Anschluss von Leuchten ist.

5. Ein System zum Installieren einer Anschlussvorrichtung (1) nach einem der vorstehenden Ansprüche an einer Decke, umfassend die Anschlussvorrichtung (1), die Deckenbefestigung (12) und eine Verankerung (13) zum Verankern der Deckenbefestigung (12) an der Decke, **dadurch gekennzeichnet, dass** die Verankerung (13) mindestens zwei Positionen aufweist:
die erste Position für eine Installationsphase, die so konfiguriert ist, um in eine Deckenöffnung (18) für das elektrische Kabel (11) zu passen;
wobei die zweite Position eine erweiterte Form umfasst, die größer ist als der Durchmesser der Deckenöffnung (18), die so konfiguriert ist, dass sie die Deckenbefestigung (12) an der Decke aufhängt.

6. Ein System nach Anspruch 5, **dadurch gekennzeichnet, dass** die Verankerung (13) mindestens zwei Positionen umfasst:
die erste Position für eine Installationsphase, parallel zur Deckenbefestigung (12), die so konfiguriert ist, dass sie in eine Deckenöffnung (18) für das elektrische Kabel (11) passt; und
die zweite Position senkrecht zur Deckenbefestigung (12), die so konfiguriert ist, dass sie die Deckenbefestigung (12) an der Decke aufhängt.

7. Ein System nach Anspruch 5 oder 6, **dadurch gekennzeichnet, dass** die Anschlussvorrichtung (1) eine Form zum Halten des Kopfes der Befestigung (12) im Befestigungsabschnitt (7) des Stützelements (4) umfasst, wenn die Anschlussvorrichtung (1) am Kopf der Befestigung (12) aufgehängt ist.

8. Ein System nach einem der Ansprüche 5 bis 7, **dadurch gekennzeichnet, dass** die Verbindungsschnittstelle zur Versorgung des elektrischen Gerätes (3) mit elektrischer Energie, eine Leuchtensteckdose ist.

9. Ein System nach einem der Ansprüche 5 bis 8, **dadurch gekennzeichnet, dass** die Verbindungsschnittstelle zur Versorgung des elektrischen Gerätes (3) mit elektrischer Energie, eine Vorrichtung für den Anschluss von Leuchten ist.

10. Ein System nach einem der Ansprüche 5 bis 9, **dadurch gekennzeichnet, dass** die Deckenbefestigung (12) ein Bolzen oder eine Schraube ist.

## Revendications

1. Dispositif de connexion pour installer un dispositif électrique au niveau d'un plafond, comprenant
une interface de connexion pour recevoir un câble électrique (2),
une interface de connexion pour fournir de l'énergie électrique au dispositif électrique (3),
un élément de support (4) configuré pour être connecté à une structure de plafond en béton et pour supporter le dispositif électrique, et
une ouverture (5) pour recevoir le câble électrique (11) et une attache de plafond (12) provenant de la structure de plafond ; l'attache de plafond (12) étant sélectionnée dans le groupe constitué par un boulon, une vis ou un ensemble d'une tige filetée et d'un écrou ;
**caractérisé en ce que** l'ouverture (5) comprend une fente (6) dans l'élément de support (4) pour recevoir de manière coulissante le corps de l'attache de plafond (12), et
la fente (6) comprenant une portion de fixation (7) plus petite que la tête de l'attache de plafond (12), ladite portion de l'élément de support (4) étant configurée pour suspendre le dispositif de connexion (1) à la tête de l'attache de plafond (12).

2. Dispositif de connexion selon la revendication 1, **caractérisé en ce qu'**il comprend une forme pour conserver la tête de l'attache (12) dans la portion de fixation (7) de l'élément de support (4) quand le dispositif de connexion (1) est suspendu à la tête de l'attache (12).

3. Dispositif de connexion selon la revendication 1 ou 2, **caractérisé en ce que** l'interface de connexion pour fournir de l'énergie électrique au dispositif électrique (3) est une sortie de douille d'éclairage.

4. Dispositif de connexion selon l'une quelconque des revendications 1 à 3, **caractérisé en ce que** l'interface de connexion pour fournir de l'énergie électrique au dispositif électrique (3) est un dispositif pour la connexion de luminaires.

5. Système pour installer un dispositif de connexion (1) selon l'une quelconque des revendications précédentes au niveau d'un plafond, comprenant le dispositif de connexion (1), l'attache de plafond (12) et une ancre (13) pour ancrer l'attache de plafond (12) au plafond ; **caractérisé en ce que** l'ancre (13) comprend au moins deux positions :
la première position pour une phase d'installation, configurée pour s'ajuster dans une ouverture de plafond (18) pour le câble électrique (11) ;
la seconde position comprenant une forme étendue qui est plus grande que le diamètre de l'ouverture de plafond (18), configurée pour suspendre l'attache de plafond (12) provenant du plafond.

6. Système selon la revendication 5, **caractérisé en ce que** l'ancre (13) comprend au moins deux positions :
la première position pour une phase d'installation, étant parallèle à l'attache de plafond (12), configurée pour s'ajuster dans une ouverture de plafond (18) pour le câble électrique (11) ; et
la seconde position étant perpendiculaire à l'attache de plafond (12), configurée pour suspendre l'attache de plafond (12) au plafond.

7. Système selon la revendication 5 ou 6, **caractérisé en ce que** le dispositif de connexion (1) comprend une forme pour conserver la tête de l'attache (12) dans la portion de fixation (7) de l'élément de support (4) quand le dispositif de connexion (1) est suspendu à la tête de l'attache (12).

8. Système selon l'une quelconque des revendications 5 à 7, **caractérisé en ce que** l'interface de connexion pour fournir de l'énergie électrique au dispositif électrique (3) est une sortie de douille d'éclairage.

9. Système selon l'une quelconque des revendications 5 à 8, **caractérisé en ce que** l'interface de connexion pour fournir de l'énergie électrique au dispositif électrique (3) est un dispositif pour la connexion de luminaires.

10. Système selon l'une quelconque des revendications 5 à 9, **caractérisé en ce que** l'attache de plafond (12) est un boulon ou une vis.
